# EUROPÄISCHE PATENTSCHRIFT

(11) **EP 3 974 218 B1**
(45) Veröffentlichungstag und Bekanntmachung des Hinweises auf die Patenterteilung: **15.02.2023**
(21) Anmeldenummer: 21196034.9
(22) Anmeldetag: 10.09.2021
(51) Int. Cl.: B60J 1/18, B60J 7/12

(54) **FALTVERDECK FÜR EIN CABRIOLET-FAHRZEUG MIT BEWEGLICHER HECKSCHEIBE**
FOLDING TOP FOR A CONVERTIBLE VEHICLE WITH MOVABLE REAR WINDOW
TOIT DÉCAPOTABLE POUR UN VÉHICULE CABRIOLET POURVU DE VITRE ARRIÈRE MOBILE

(30) Priorität: 10.09.2020 DE 102020211395
(43) Veröffentlichungstag der Anmeldung: 30.03.2022
(73) Patentinhaber: Magna Car Top Systems GmbH, 74321 Bietigheim-Bissingen (DE)
(72) Erfinder: SUESS, Reinhard, 74831 Gundelsheim (DE); JOHE, Ralf, 74706 Osterburken (DE); WOCHNER, Ulrich, 71679 Asperg (DE); SOERGEL, Christian, 70197 Stuttgart (DE); RAKUS, Bernd, 71229 Leonberg (DE)
(74) Vertreter: Völger, Silke Beatrix

(56) Entgegenhaltungen:
- DE-A1- 10 242 044
- DE-A1-102004 049 674
- DE-A1-102013 011 590

## Beschreibung

Die Erfindung betrifft ein Faltverdeck für ein Cabriolet-Fahrzeug mit einem Verdeckbezug und einer in den Verdeckbezug eingeschäumten Heckscheibe, wobei der untere Randbereich der Heckscheibe von innen mit dem Verdeckbezug verbunden ist.

### Stand der Technik

Verdecke für Fahrzeuge zum Öffnen weisen eine Verdeckschicht auf, die in der Regel flexibel ausgebildet ist. Man spricht hier auch von Soft-Top- oder Cabriolet-Verdecken.

Aus der DE10 2013 010 883 A1 und der DE 10 2013 011 590 A1 ist ein Kraftfahrzeugverdeck bekannt, umfassend eine Verdeckschicht mit wenigstens einer Aussparung, innerhalb der eine Heckscheibe angeordnet ist, wobei ein die Aussparung umgebender Randbereich der Verdeckschicht mit dem äußeren Randbereich der Heckscheibe unter Verwendung eines PUR-Wulstelementes verbunden ist.

Der Verbindungsbereich zwischen Verdeckschicht und Heckscheibe wird derartig ausgestaltet, dass ein Polyurethan-Wulstelement den Randbereich der Verdeckschicht mit dem äußeren Randbereich der Heckschiene verbindet, und zugleich eine elektrische Sammelschiene zumindest teilweise übergreift.

Die Verwendung von Polyurethanschaum zur Herstellung der Einfassung von Fahrzeugscheiben ist bekannt. Bei diesem bekannten Faltverdeck ist die Heckscheibe umlaufend in der Verdeckschicht unbeweglich eingeschäumt gehalten.

Ein derartiges Faltverdeck ist auch aus der DE 20 2006 017 746 U1 bekannt. Dieses Faltverdeck umfasst ebenfalls eine faltbare Verdeckschicht, die mittels eines Verdeckgestänges zwischen einer einen Fahrzeuginnenraum überdeckenden Schließstellung und einer diesen freigebenden Öffnungsstellung verstellbar ist. Die Verdeckschicht weist in einem in Schließstellung im Heckbereich befindlichen Abschnitt eine Aussparung auf, innerhalb der eine Heckscheibe angeordnet ist. Die Heckscheibe bzw. ein Heckscheibenrahmen ist umlaufend über eine Gießharzprofil an der Verdeckschicht angebunden.

Verbaut man diese Fahrzeugscheiben in einer festen Karosserie, sind die umschäumten Randbereiche verdeckt und stellen kein Problem dar. Verwendet man eine solche Fahrzeugscheibe als Heckscheibe in einem Faltverdeck wird die Heckscheibe komplett mit den Verdeckstoff mit umschäumten Randbereichen, hergestellt.

Bei diesen standardmäßig im Verdeckbezug eingebundenen Cabrio-Heckscheiben verläuft der Verdeckbezug unterhalb der Unterkante der Heckscheibe weiter in Verlängerung und bildet durch Umschlagen über das Spannbügelprofil den Abschluss des Faltverdecks.

Gerade im unteren Randbereich der Heckscheibe stellt das aber ein ästhetisches Problem dar, da nur wenig Verdeckstoff sichtbar wird. Des Weiteren muss aufgrund der Verstellbewegung des Faltverdecks zwischen der Schließstellung und der Öffnungsstellung und vice versa in der Schließstellung eine faltenfreie ausreichende Spannung der Verdeckschicht gewährleistet sein, wobei diese Spannung von der umschäumten Heckcheibe ausreichend aufgenommen werden muss. Ein weiteres wichtiges Kriterium betrifft die Verstellbewegung in die Öffnungsstellung des Faltverdecks. Bei der Verstellbewegung in die Öffnungsstellung wird der Spannbügel verschwenkt, wobei in der Öffnungsstellung die Verdeckbauteile mit Verdeckgestänge, sowie Verdeckschicht und Heckscheibe möglichst kompakt und platzsparend in einem Ablageraum verstaut sein sollen. Das Verschwenken des Spannbügels und Verstellen in die Öffnungsstellung ist abhängig von der möglichen Kippbewegung der Heckscheiben Oberkante, welche abhängig von einer freien Länge des Stoffs der Verdeckschicht im Bereich des unteren Randbereichs bei Y0 der Heckscheibe ist.

Es ist Aufgabe der Erfindung ein Faltverdeck mit einer beweglichen in einem Verdeckbezug umschäumten Heckscheibe herzustellen, bei der der untere Rand ohne sichtbaren Verdeckbezugsanteil mit dem Fahrzeug abschließt. Des Weiteren soll in der Schließposition des Faltverdecks die Heckscheibe, die durch die Spannung des Verdeckbezugs auftretenden Zugspannungen sicher aufnehmen und in der Öffnungsposition soll eine kompakte Verstausituation der Verdeckbauteile mit Verdeckgestänge, Verdeckbezug und Heckscheibe erreicht werden.

Diese Aufgabe wird durch die im Anspruch 1 angegebenen Merkmale gelöst.

Die Aufgabe wird gelöst mit einem Faltverdeck für einen Cabriolet-Fahrzeug mit einem Verdeckbezug und einer in den Verdeckbezug eingeschäumten Heckscheibe, wobei der obere Randbereich und die seitlichen Randbereiche eingeschäumt und der untere Randbereich der Heckscheibe von innen mit dem Verdeckbezug über einen Schäumung oder Klebung verbunden ist.

Die Erfindung ermöglicht es, eine im Verdeckbezug eingeschäumte Heckscheibe so aufzubauen, dass optisch mit der Unterkante der Heckscheibe die Fuge zum Verdeckkastendeckel bzw. Kofferraumdeckel einen sauberen Abschluss bildet. Die Umschäumung des Verdeckbezugs verläuft dabei umlaufend um den oberen Randbereiche der Heckscheibe und die seitlichen Randbereiche der Heckscheibe, wobei die ein Profil bildende PU-Umschäumung nicht die gesamten seitlichen Randbereiche einfasst, sondern beabstandet zu dem unteren Randbereich der Heckscheibe endet. In diesem Abstand von der unteren Randkante des unteren Randbereichs ist die Heckscheibe ebenfalls unlösbar an dem Verdeckbezugs befestigt. Hierfür ist der Verdeckbezug an einem ersten Endbereich über eine horizontal in y-Richtung verlaufende PU Umschäumung auf der Innenseite der Heckscheibe oder über y-Richtung verlaufende Klebeschicht festgelegt. Entlang der horizontalen Befestigung der Heckscheibe im unteren Randbereich bildet sich eine in y- Richtung verlaufende Kippachse der Heckscheibe. Der unterhalb dieser horizontalen Befestigung der Heckscheibe im unteren Randbereich befindliche Teilbereich der Heckscheibe liegt unbefestigt auf dem Spannbügel des Faltverdecks auf. Der Verdeckbezug ist an diesem unteren Randbereich der Heckscheibe von der Außenseite nicht sichtbar. Er ist mittels eines ersten Endbereichs in der PU Umschäumung gehalten, über den Spannbügel geführt und dort mittels eines zweiten Endbereichs fixiert.

Vorzugsweise ist der Verdeckbezug beabstandet zur Randkante im unteren Randbereich der Heckscheibe mit einem Abstandshalter gegen die Heckscheibe zusammen umschäumt.

Alternativ ist der Verdeckbezug beabstandet zur Randkante im unteren Randbereich der Heckscheibe an der Heckscheibe mittels einer Klebeverbindung gehalten.

Zur Ausbildung eines flächigen, bündigen Übergangs zwischen den seitlichen Randbereichen der unterhalb der Umschäumung befindlichen seitlichen Randbereiche der Heckscheibe ist auf dem Spannbügel und unter dem Verdeckbezug ein Zusatzelement angeordnet.

Die x, y und z Richtung bezeichnen die in einem Fahrzeugkoordinatensystem üblichen Richtungen, wobei die X-Richtung die Fahrzeuglängsrichtung, die y-Richtung die Fahrzeugquerrichtung und die z-Richtung die Fahrzeughochrichtung ist. Mit Y0 wird in der Fahrzeugquerrichtung die Fahrzeugmitte bezeichnet.

Das erfindungsgemäße Faltverdeck wird in unterschiedlichen Ausführungsformen nachfolgend näher beschrieben und in den Zeichnungen schematisch dargestellt.

Es zeigt:

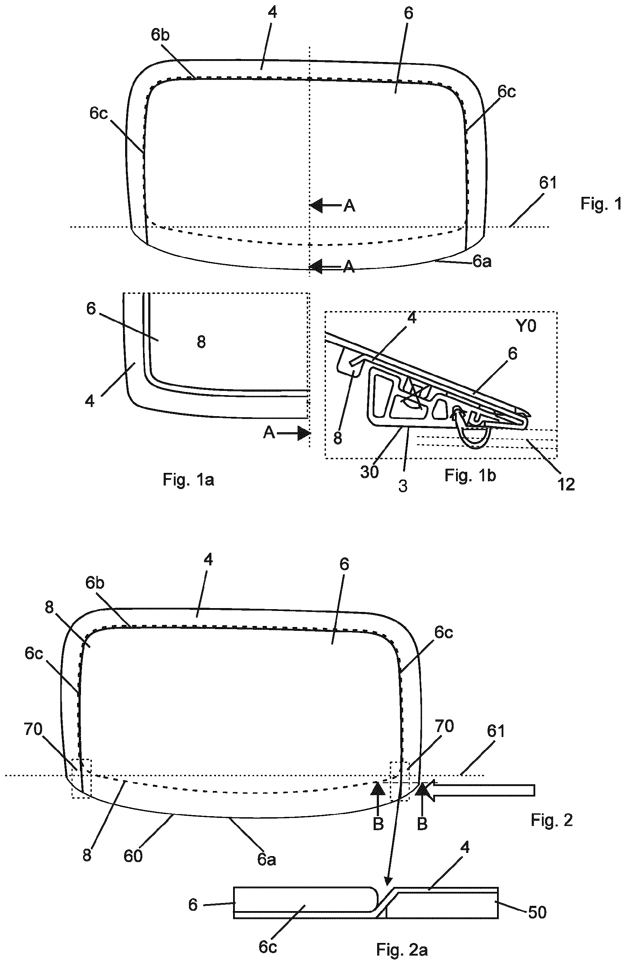

- Figur 1: eine Heckscheibe mit Umschäumung im Verdeckbezug von einer Außenseite,
- Figur 1a: einen Ausschnitt der Heckscheibe mit Umschäumung von der Innenansicht;
- Figur 1 b: einen Schnitt längs der Linie A-A bei Y0 gemäß der Figur 1
- Figur 2: die Heckscheibe mit Umschäumung im Verdeckbezug von der Außenseite mit eingezeichneter Kippachse,
- Figur 2a: ein Detail der Heckscheibe längs der Schnittlinie B-B,
- Figur 3: ein Werkzeug zum Umschäumen des ersten Endbereichs des Verdeckbezugs auf der Innenseite der Heckscheibe am unteren Randbereich,
- Figur 3a: den Abstandshalter zum Umschäumen in einer Detaildarstellung
- Figur 4: die Heckscheibe in der Schließstellung des Faltverdecks
- Figur 5: die Heckscheibe in der Öffnungsstellung des Faltverdecks, wobei das Faltverdeck in einem heckseitigen Aufnahmeraum abgelegt ist.

### Beschreibung der Erfindung:

Ein zeichnerisch nicht dargestelltes und hinsichtlich seines grundsätzlichen Aufbaus dem Fachmann bekanntes Faltverdeck umfasst einen Verdeckbezug 4 bzw. Verdeckstoff, der mittels eines Verdeckgestänges zwischen einer einen Fahrzeuginnenraum überdeckenden Schließstellung und einer diesen freigebenden Öffnungsstellung verstellt werden kann. Das verstellbare Faltverdeck erstreckt sich ausgehend von einem auf der Vorderseite des Fahrzeugs angeordneten Windschutzscheibenrahmen in den Heckbereich ++ des Fahrzeugs Das Faltverdeck ist bezogen auf eine Mittelachse symmetrisch aufgebaut

Der entgegen der Fahrtrichtung weisende Heckbereich des Faltverdecks ist schräg nach unten weisend ausgebildet, wobei er in seinem unteren Endbereich durch einen Spannbügel 3 begrenzt wird. Der Spannbügel 3 liegt dabei auf einer Oberkante der Karosserie bzw. eines Verdeckkastendeckels 12 an. Der Verdeckkastendeckel 12 ist in den Zeichnungen der Figuren 1b, 4 und 5 nur gestrichelt angedeutet. Der im Wesentlichen umlaufende Rand des Faltverdecks 1 bildet hierbei den Auflagebereich zur Fahrzeugkarosserie und ist über Dichtungselemente 10 abgedichtet.

In der Schließstellung des Faltverdecks weist der im heckseitigen Bereich schräg verlaufende Verdeckbezug 4 einen Ausschnitt auf, in dem eine Heckscheibe 6 angeordnet ist. Die Heckscheibe 6 umfasst dabei einen unteren Randbereich 6a mit einer Randkante 60, einen oberen Randbereich 6b, sowie seitliche Randbereiche 6c. Zur unlösbaren Anbindung des Verdeckbezugs 4 an die Heckscheibe 6 ist die Heckscheibe 6 umlaufend wie nachfolgend beschrieben mit dem Verdeckbezug durch eine PU-Umschäumung 8 befestigt. Die PU-Umschäumung ist in der Figur 1 die eine Ansicht auf die Heckscheibe 6 von der Außenseite her zeigt durch die gestrichelte umlaufende Linie angezeigt und verläuft mit eingeschäumtem Verdeckbezug wie folgt:
- um den oberen Randbereich 6b der Heckscheibe 6 komplett
- um die Eckbereiche am oberen Randbereich 6b weiter verlaufend an den seitlichen Randbereichen 6c nach unten; Umschäumung endet an den seitlichen Randbereichen 6c beabstandet zu der unteren Randkante 60
- und verläuft dann ausgehend von den seitlichen Randbereichen in einer horizontalen Erstreckung auf der Innenseite der Heckscheibe 6 im unteren Randbereich 6a.

Alternativ zu dieser in den Figuren gezeigten umlaufenden Befestigung des Verdeckbezugs 4 kann die Befestigung in der horizontalen Erstreckung (y-Richtung) im unteren Randbereich 6a auch durch eine Verklebung des Verdeckbezugs 4 mit der Heckscheibe 6 erfolgen.

In Figur 1 ist eine komplett umschäumte Heckscheibe dargestellt, die mit ihrer Randkante 60 des unteren Randbereichs 6a bis zum Verdeckkastendeckel bzw. Kofferraumdeckel 12 derart verläuft, dass der Verdeckbezug 4 an dem unteren Randbereich 6a der Heckscheibe 6 von der Außenseite her gesehen nicht sichtbar ist.

Von außen bietet die Heckscheibe 6 den Eindruck, als ob der unterer Randbereich 6a bzw. die Randkante 60 überhaupt nicht umschäumt wäre. Die Umschäumung weist eine seitliche Anbindung zum Verdeck-Gestell auf.

Zur Erzeugung der Stoffspannung in der Schließposition und zur Erzielung der notwendigen Formgebung wird der Spannbügel 3 über eine Sturmstange in der Schließstellung in die den Verdeckbezug 4 spannende Position gedrückt und in dieser Position fixiert. Der Spannbügel 3 weist eine im Wesentlichen u-förmige Form auf, und weist einen mittleren in Querrichtung verlaufenden Abschnitt 3a und seitliche Schenkel 3b auf, wobei die Form dem gewünschten Verlauf des Verdeckbezugs 4 im seitlichen und hinteren Bereich entspricht.

Figur 1b sowie die Figuren 4 und 5 zeigen im Schnitt den keilförmigen Spannbügel 3, der als Hohlprofil ausgeführt ist. Der Spannbügel umfasst dabei eine Unterseite 30, einen senkrecht verlaufenden Seitenbereich 31 und einen schräg zur Heckseite nach unten verlaufende Oberseite 32 auf.

Im Bereich der Unterseite 30 des Spannbügels 3 sind benachbart zum Hohlprofil ein Aufnahmeabschnitt B und ein Verbindungsabschnitt A ausgebildet. Der Aufnahmeabschnitt B ist als kanalförmige nach unten offene Nut ausgeführt, die einen im Querschnitt verengten Öffnungsbereich aufweist. Des Weiteren ist der Spannbügel 3 mit dem Verbindungsabschnitt 36 ausgeführt, der auf der zur Oberseite 32 gegenüberliegenden Unterseite eine stegartige Leiste 37 mit verdicktem Endbereich 38 umfasst.

Der Spannbügel 3 kann aus Metall bevorzugt aus Leichtmetall, weiter bevorzugt aus Aluminium oder einer Aluminiumlegierung, hergestellt werden. Es ist jedoch auch denkbar, dass der Spannbügel aus Kunststoff hergestellt, wird. Aluminium bietet den Vorteil, dass es wesentlich leichter als Stahl ist, und wird bevorzugt zur Herstellung von Strangpressprofilen eingesetzt.

Die Figuren 1b, 4 und 5 zeigen die Anbindung und Anordnung der Heckscheibe 6 an dem Verdeckbezug 4 im Bereich des unteren Randbereichs 6a bis zur Randkante 60 der Heckscheibe 6. Beabstandet zu der Randkante 60 ist der Verdeckbezug 4 mittels eines ersten Randbereichs 4a in der horizontal verlaufenden PU Umschäumung auf der Innenseite der Heckscheibe 6 im unteren Randbereich 6a eingeschäumt gehalten. Ausgehend von der PU Umschäumung verläuft der Verdeckbezug 4 dann zwischen der Heckscheibe 6 und der schräg verlaufenden Oberseite 32 des Spannbügels nach schräg unten, ist über eine Randkante des Spannbügels 3 auf die Unterseite 30 umgeschlagen und mittels eines zweiten Randbereichs 4b am Spannbügel 3 fixiert.

Dieser zweite endseitige Randbereich 4b des Verdeckbezugs 4 ist auf die Unterseite 30 des Spannbügels 3 geführt und dort an der Leiste 37 angebunden. Die Anbindung erfolgt über eine an dem Verdeckbezug 4 befestigte Halteleiste 41, die eine Aufnahme 42 aufweist (Kederanbindung). Der Verdeckbezug 4 ist über die Aufnahme 42 auf die Leiste 37 mit verdicktem Endbereich 38 aufgepresst und wird an dem Verbindungsabschnitt 36 formschlüssig gehalten. Der Verdeckbezug 4 liegt somit in Bezug auf die Heckscheibe 6 im unteren Randbereich 6a innen in Richtung Fahrzeuginnenraum + auf dem Spannbügel 3 auf und ist im Bereich des unteren Randbereichs 6a von der Außenseite* her gesehen für einen Nutzer nicht sichtbar. Hierfür ist dieser Bereich der Heckscheibe 6 geschwärzt ausgestaltet.

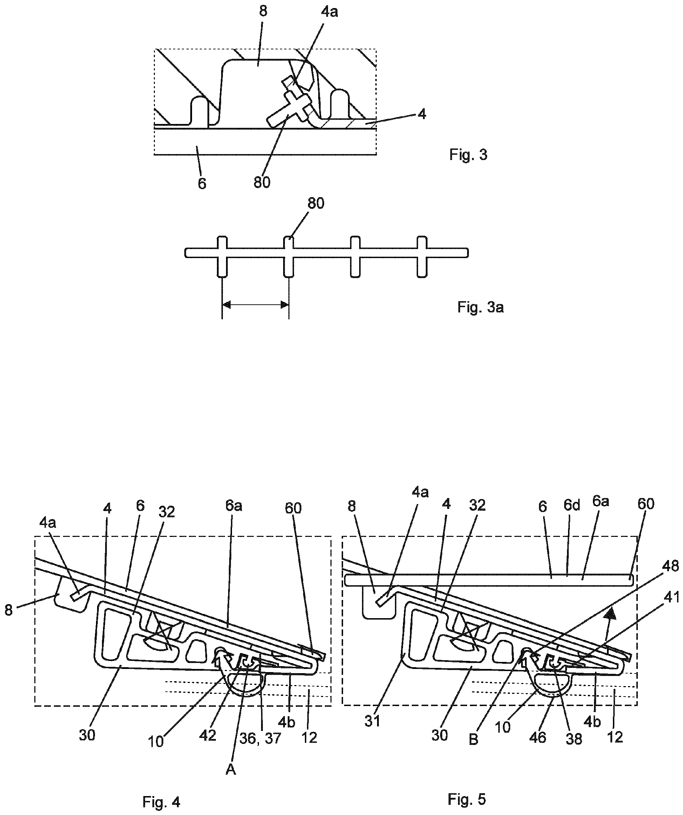

Wie es weiterhin aus der Darstellung der Figuren 1b, 4 und 5 zu erkennen ist, liegt die Heckscheibe 6 ab der horizontalen PU Umschäumung unten schräg nach unten verlaufend mittels ihres unteren Randbereichs 6a auf der Oberseite 32 des Spannbügels 3 in seinem mittleren Bereich 3a von oben her gesehen auf und überdeckt den Spannbügel 3 in diesem Bereich vollständig. Eine Anbindung an den Spannbügel 3 ist in diesem Bereich nicht vorgesehen, auch der Verdeckbezug 4 ist in diesem Bereich unterhalb der PU Umschäumung in den seitlichen Randbereichen 6c nicht angebunden. Hierdurch kann die Heckscheibe 6 um eine virtuelle Kippachse 61, wie in Figur 2 dargestellt, ausgehend von der in der Figur 4 gezeigten Position in die in der Figur 5 gezeigten Position nach oben verschwenken.

Die maximale Kippbewegung der Heckscheiben-Oberkante ist abhängig von der freien Stofflänge bei Y=0 im Bereich der Heckscheiben Unterkante 60, die wiederum abhängig vom Sichtstrahl und dem geschwärzten Bereich der Scheibe ist.

Die Scheibe ist so umschäumt, dass eine Übertragung der Zugkräfte aus den gespannten Stoffbahnen möglich ist.

In dem Bereich direkt über dem Spannbügel 3 liegt der nicht umschäumte Teilabschnitt 6d der Heckscheibe 6 auf dem Verdeckbezug 4 auf. Dieser ca. 60-80mm breite seitliche Bereich des Verdeckbezugs 4 ist in der Figur 2a im Schnitt gezeigt. Damit in diesem Bereich ein bündiger Übergang zwischen seitlichem Randbereich 6c der Heckscheibe 6 und dem Verdeckbezug 4 ausgestaltet ist, wird im seitlichen Bereich benachbart zu der Heckscheibe 6 unterhalb des Verdeckbezugs 4 auf dem Spannbügel 3 ein Zusatzelement 50 montiert, welches einen Höhenausgleich schafft und den Verdeckbezug 4, wie es in der Figur 2a dargestellt ist, in einen Verlauf nach oben drückt.

In Figur 2 ist links und rechts ein Bereich 70 markiert. Dieser markierte 60-80mm breite seitliche Bereich 70 oberhalb des Spannbügels 3 wird durch die Spannbügelkontur und das darauf montiertes Zusatzelement 50 nach oben gedrückt, wenn sich der Verdeckbezug beim Verstellen des Faltverdecks in die Schließstellung ausspannt.

Zur Herstellung der Verbindung wird der Verdeckbezug 4 unterhalb der Heckscheibe 6 an dem zu umschäumenden ersten Endbereich 4a gelocht. Dieser stegartige erste Endbereich 4a ist ein Verdeckabschnitt der um einen spitzen Winkel zum Verdeckbezug 4 hin umgebogen wird.

In den gelochten stegartigen ersten Endbereich 4a wird ein Kunststoffspritzgussteil eingesteckt, das die Aufgabe hat, den stegartigen ersten Endbereich 4a zur Heckscheibe 6 auf Abstand zu halten.

Das Kunststoffspritzgussteil als Abstandshalter 80, wird dabei mit eingeschäumt.

Die Umschäumung muss entsprechend dimensioniert werden, damit Heckscheibe 6 stegartiger erster Endbereich 4a und Abstandshalter 80 umfasst sind. Der Kunststoff des Abstandshalters 80 muss mit dem Material der Umschäumung abgestimmt werden, damit keine Lunker und Abplatzer durch evtl. Ausgasungen entstehen.

Figur 3 zeigt eine Werkzeugansicht beim Umschäumverfahren des Verdeckbezugs 4 auf der Innenseite der Heckscheibe 6 im unteren Randbereich 6a beabstandet zu der Randkante 60.

Alternativ kann auch ein Keder aus Kunststoff an den stegartigen ersten Endbereich 4a angenäht werden, der ebenfalls als Abstandshalter dienen soll. Dadurch entfällt das Lochen im Verdeckbezug und das Einstecken des Abstandshalters 80.

Der Keder wir ebenfalls mit eingeschäumt und muss daher auf das Material der Umschäumung abgestimmt werden, damit keine Lunker und Abplatzer durch evtl. Ausgasungen entstehen.

Die Heckscheibe 6 hebt im unteren Teilbereich bei Bewegung des Spannbügels 3 von dem darunter befindlichen Verdeckbezug ab und legt sich auf den Spannbügel 3.

Das Faltverdeck 1 liegt im geschlossenen Zustand mit einem Verdeckrandbereich R über das randseitiges Dichtungselement 10 an dem Verdeckkastendeckel 12 auf. Aus der Schnittdarstellung der Figur 4 und der Figur 5 kann man ersehen, dass das Dichtungselement 10 einen Grundkörper aus einem gummielastischen Hohlprofil 46 mit einer nach oben ragenden Halteleiste mit einem Kopfabschnitt 48 ausgeführt ist. Der Kopfabschnitt 48 weist dabei schräg nach außen verlaufende Halteabschnitte auf. Wie es aus der Figur zu erkennen ist, ist das Dichtungselement 10 mit dem Kopfabschnitt 48 in den Aufnahmeabschnitt B eingepresst, wobei sich die Halteabschnitte in dem Aufnahmeabschnitt B abstützen. Hierdurch wird die Anbindung des Dichtungselementes 10 an den Spannbügel 3 erreicht

## Patentansprüche

1. Faltverdeck für einen Cabriolet-Fahrzeug mit einem Verdeckbezug (4) und einer in den Verdeckbezug (4) umlaufend befestigten Heckscheibe (6), wobei die Heckscheibe (6) einen unteren Randbereich (6a) mit Randkante (60), einen oberen Randbereich (6b) und seitliche Randbereiche (6c) umfasst und wobei zur Befestigung der Heckscheibe (6) eine Umschäumung zwischen Verdeckbezug (4) und dem obere Randbereich (6b) und den seitlichen Randbereichen (6c) vorgesehen ist, und wobei das Faltverdeck einen Spannbügel (3) umfasst, **dadurch gekennzeichnet, dass** die Umschäumung der seitlichen Randbereiche (6c) ausgehend von dem oberen Randbereich (6b) verläuft und beabstandet zu der unteren Randkante (60) endet und in diesem Abstand zur Randkante (60) der untere Randbereich (6a) ausgehend von den seitlichen Randbereichen in einer horizontalen Erstreckung auf der Innenseite der Heckscheibe (6) mit dem Verdeckbezug (4) verbunden ist, derart, dass ein unterer Teilbereich der Heckscheibe (6) unter Zwischenlage des Verdeckbezugs (4) beweglich und nicht verbunden auf dem Spannbügel (3) aufliegt, wobei die Bewegung der Heckscheibe (6) über eine virtuelle Kippachse (61) realisiert wird, die horizontal in Richtung der Anbindung des Verdeckbezugs (4) im unteren Randbereich (6a) verläuft.

2. Faltverdeck für einen Cabriolet-Fahrzeug nach Anspruch 1, **dadurch gekennzeichnet, dass** die Befestigung der Heckscheibe (6) im unteren Randbereich (6a) beabstandet zur Randkante (60) mittels einer Umschäumung mit einem ersten Endbereich (4a) des Verdeckbezugs (4) erreicht wird.

3. Faltverdeck für ein Cabriolet-Fahrzeug nach Anspruch 2, **dadurch gekennzeichnet, dass** der Verdeckbezug (4) an dem ersten Endbereich (4a) im unteren Randbereich (6a) der Heckscheibe mit einem Abstandshalter (80) gegen die Heckscheibe zusammen umschäumt gehalten ist.

4. Faltverdeck für einen Cabriolet-Fahrzeug nach Anspruch 1, **dadurch gekennzeichnet, dass** die Befestigung der Heckscheibe (6) im unteren Randbereich (6a) mittels einer Klebeverbindung mit einem ersten Endbereich (4a) des Verdeckbezugs (4) erreicht wird.

5. Faltverdeck für ein Cabriolet-Fahrzeug nach einem der vorangehenden Ansprüche, **dadurch gekennzeichnet, dass** der Spannbügel (3) im Wesentlichen u-förmig ausgebildet ist und einen mittleren Bereich (3a) und seitliche Schenkel (3b) aufweist, und wobei der Spannbügel (3) von der Außenseite her gesehen unterhalb des unteren Randbereichs (6a) der Heckscheibe (6) verdeckt auf der Innenseite angeordnet ist.

6. Faltverdeck für ein Cabriolet-Fahrzeug nach einem der vorangehenden Ansprüche, **dadurch gekennzeichnet, dass** der Spannbügel (3) im Heckbereich des Kraftfahrzeugs angeordnet und zumindest mit dem mittleren Bereich (3a) auf einem karosserieseitigen Bauteil, vorzugsweise einem Verdeckkastendeckel (12) in der Schließstellung aufliegt und eine Unterseite (30), einen senkrecht (z-Richtung) verlaufenden Seitenbereich (31) und einen schräg zur Heckseite nach unten verlaufende Oberseite (32) aufweist

7. Faltverdeck für ein Cabriolet-Fahrzeug nach einem der vorangehenden Ansprüche, **dadurch gekennzeichnet, dass** der Verdeckbezug (4) ausgehend von dem eingeschäumten ersten stegartigen Endbereich (4a) im weiteren Verlauf über die Oberseite (32) des Spannbügels geführt und um eine Randkante auf die Unterseite (30) des Spanbügels umgeschlagen und mittels eines zweiten Randbereichs (4b) am Spannbügel (3) fixiert gehalten ist.

8. Faltverdeck für ein Cabriolet-Fahrzeug nach einem der vorangehenden Ansprüche, **dadurch gekennzeichnet, dass** der Spannbügel (3) einen Verbindungsabschnitt (36) umfasst, der auf der Unterseite (30) eine stegartige Leiste mit einem verdickten Endbereich (38) umfasst, und dass der Spannbügel (3) auf der Unterseite (30) einen Aufnahmeabschnitt (B) zur Aufnahme eines Dichtungselements (10) umfasst.

9. Faltverdeck für ein Cabriolet-Fahrzeug nach einem der vorangehenden Ansprüche, **dadurch gekennzeichnet, dass** in den nicht umschäumten seitlichen Randbereichen (6c) der Heckscheibe (6) zur Erzielung eines bündigen Übergang zwischen Heckscheibe (6) und dem Verdeckbezug (4) im seitlichen Bereich benachbart zu der Heckscheibe (6) unterhalb des Verdeckbezugs (4) auf dem Spannbügel (3) ein Zusatzelement (50) angeordnet ist.

## Claims

1. Folding top for a convertible vehicle having a top cloth (4) and a rear window (6) peripherally fastened in the top cloth (4), wherein the rear window (6) comprises a lower peripheral region (6a) with a peripheral edge (60), an upper peripheral region (6b) and lateral peripheral regions (6c), and wherein, for fastening the rear window (6), a foam encapsulation is provided between the top cloth (4) and the upper peripheral region (6b) and the lateral peripheral regions (6c), and wherein the folding top comprises a clamping bracket (3), **characterized in that** the foam encapsulation of the lateral peripheral regions (6c) extends from the upper peripheral region (6b) and ends at a distance from the lower peripheral edge (60), and, at this distance from the peripheral edge (60), the lower peripheral region (6a), extending horizontally from the lateral peripheral regions, is connected to the top cloth (4) on the inner side of the rear window (6) such that a lower subregion of the rear window (6) rests on the clamping bracket (3) in a movable and non-connected manner, with the top cloth (4) located in between, wherein the movement of the rear window (6) is realized via a virtual tilt axis (61) which extends horizontally in the direction of the attachment of the top cloth (4) in the lower peripheral region (6a).

2. Folding top for a convertible vehicle according to Claim 1, **characterized in that** the fastening of the rear window (6) in the lower peripheral region (6a) at a distance from the peripheral edge (60) is achieved by means of a foam encapsulation with a first end region (4a) of the top cloth (4).

3. Folding top for a convertible vehicle according to Claim 2, **characterized in that** the top cloth (4) is held against the rear window by a spacer (80), in a jointly foam-encapsulated manner, in the first end region (4a) in the lower peripheral region (6a) of the rear window.

4. Folding top for a convertible vehicle according to Claim 1, **characterized in that** the fastening of the rear window (6) in the lower peripheral region (6a) is achieved by an adhesive bond with the first end region (4a) of the top cloth (4).

5. Folding top for a convertible vehicle according to one of the preceding claims, **characterized in that** the clamping bracket (3) is configured in a substantially U-shaped manner and has a central region (3a) and lateral legs (3b), and wherein the clamping bracket (3), as seen from the outer side, is arranged beneath the lower peripheral region (6a) of the rear window (6) in a concealed manner on the inner side.

6. Folding top for a convertible vehicle according to one of the preceding claims, **characterized in that** the clamping bracket (3) is arranged in the rear region of the motor vehicle and rests at least with the central region (3a) on a body component, preferably a folding-top compartment lid (12) in the closed position, and has an underside (30), a perpendicularly (z direction) extending side region (31) and a top side (32) extending downwardly obliquely with respect to the rear side.

7. Folding top for a convertible vehicle according to one of the preceding claims, **characterized in that** the top cloth (4), starting from the foamed-in first web-like end region (4a), is then guided over the top side (32) of the clamping bracket and wrapped around a peripheral edge onto the underside (30) of the clamping bracket, and is kept fixed to the clamping bracket (3) by means of a second peripheral region (4b).

8. Folding top for a convertible vehicle according to one of the preceding claims, **characterized in that** the clamping bracket (3) comprises a connecting portion (36) which comprises, on the underside (30), a web-like strip with a thickened end region (38), and **in that** the clamping bracket (3) comprises, on the underside (30), a receiving portion (B) for receiving a sealing element (10).

9. Folding top for a convertible vehicle according to one of the preceding claims, **characterized in that**, in the lateral peripheral regions (6c) of the rear window (6), which are not foam encapsulated, in order to achieve a flush transition between the rear window (6) and the top cloth (4), an auxiliary element (50) is arranged in the lateral region next to the rear region (6) beneath the top cloth (4) on the clamping bracket (3).

## Revendications

1. Toit décapotable pour un véhicule cabriolet, comprenant un revêtement de toit (4) et une vitre arrière (6) fixée de manière périphérique dans le revêtement de toit (4), dans lequel la vitre arrière (6) comprend une partie marginale inférieure (6a) pourvue d'une arête marginale (60), une partie marginale supérieure (6b) et des parties marginales latérales (6c), et dans lequel un enrobage de mousse est prévu entre le revêtement de toit (4) et la partie marginale supérieure (6b) et les parties marginales latérales (6c) pour la fixation de la vitre arrière (6), et dans lequel le toit décapotable comprend un étrier de serrage (3),
**caractérisé en ce que** l'enrobage de mousse des parties marginales latérales (6c) s'étend en partant de la partie marginale supérieure (6b) et se termine à distance de l'arête marginale inférieure (60), et à cette distance de l'arête marginale (60), la partie marginale inférieure (6a) est reliée au revêtement de toit (4) en partant des parties marginales latérales dans une extension horizontale sur la face intérieure de la vitre arrière (6) de telle sorte qu'une partie partielle inférieure de la vitre arrière (6) repose sur l'étrier de serrage (3) de manière mobile et non reliée avec interposition du revêtement de toit (4), dans lequel le mouvement de la vitre arrière (6) est réalisé par l'intermédiaire d'un axe de basculement virtuel (61) qui s'étend horizontalement en direction de l'attache du revêtement de toit (4) dans la partie marginale inférieure (6a).

2. Toit décapotable pour un véhicule cabriolet selon la revendication 1, **caractérisé en ce que** la fixation de la vitre arrière (6) dans la partie marginale inférieure (6a) à distance de l'arête marginale (60) est obtenue au moyen d'un enrobage de mousse avec une première partie d'extrémité (4a) du revêtement de toit (4).

3. Toit décapotable pour un véhicule cabriolet selon la revendication 2, **caractérisé en ce que** le revêtement de toit (4) est maintenu à la première partie d'extrémité (4a) dans la partie marginale inférieure (6a) de la vitre arrière en étant enrobé de mousse conjointement avec une entretoise (80) contre la vitre arrière.

4. Toit décapotable pour un véhicule cabriolet selon la revendication 1, **caractérisé en ce que** la fixation de la vitre arrière (6) dans la partie marginale inférieure (6a) est obtenue au moyen d'un assemblage collé avec une première partie d'extrémité (4a) du revêtement de toit (4).

5. Toit décapotable pour un véhicule cabriolet selon l'une quelconque des revendications précédentes, **caractérisé en ce que** l'étrier de serrage (3) est réalisé substantiellement en forme de U et présente une partie centrale (3a) et des branches latérales (3b), et dans lequel l'étrier de serrage (3), vu depuis la face extérieure, est disposé sur la face intérieure de manière masquée sous la partie marginale inférieure (6a) de la vitre arrière (6).

6. Toit décapotable pour un véhicule cabriolet selon l'une quelconque des revendications précédentes, **caractérisé en ce que** l'étrier de serrage (3) est disposée dans la partie arrière du véhicule automobile et repose au moins avec la partie centrale (3a) sur un composant côté carrosserie, de préférence un couvercle de compartiment de toit (12), dans la position de fermeture, et présente une face inférieure (30), une partie latérale (31) s'étendant verticalement (direction z) et une face supérieure (32) s'étendant en oblique vers le bas par rapport à la face arrière.

7. Toit décapotable pour un véhicule cabriolet selon l'une quelconque des revendications précédentes, **caractérisé en ce que** le revêtement de toit (4), en partant de la première partie d'extrémité (4a) de type barrette, enrobée de mousse, est guidé par la suite sur la face supérieure (32) de l'étrier de serrage, et est replié sur une arête marginale sur la face inférieure (30) de l'étrier de serrage, et est maintenu fixé sur l'étrier de serrage (3) au moyen d'une deuxième partie marginale (4b).

8. Toit décapotable pour un véhicule cabriolet selon l'une quelconque des revendications précédentes, **caractérisé en ce que** l'étrier de serrage (3) comprend une section de raccordement (36) qui comprend sur la face inférieure (30) une baguette de type barrette pourvue d'une partie d'extrémité plus épaisse (38), et **en ce que** l'étrier de serrage (3) comprend sur la face inférieure (30) une section de réception (B) pour recevoir un élément d'étanchéité (10).

9. Toit décapotable pour un véhicule cabriolet selon l'une quelconque des revendications précédentes, **caractérisé en ce que** dans les parties marginales latérales (6c) sans enrobage de mousse de la vitre arrière (6), pour obtenir une transition affleurée entre la vitre arrière (6) et le revêtement de toit (4), un élément supplémentaire (50) est disposé dans la partie latérale à côté de la vitre arrière (6) au-dessous du revêtement de toit (4) sur l'étrier de serrage (3).
